# EUROPEAN PATENT APPLICATION

(11) **EP 4 592 176 A1**
(43) Date of publication of application: **30.07.2025**
(21) Application number: 23867436.0
(22) Date of filing: 18.09.2023
(51) Int. Cl.: B64D 9/00

(54) **CARGO HOLD AND UNMANNED AERIAL VEHICLE COMPRISING SAME**

(30) Priority: 19.09.2022 CN 202222471543 U
(71) Applicant: Autoflight (Kunshan) Co., Ltd., Suzhou, Jiangsu 215345 (CN)
(72) Inventor: TIAN, Yu, Suzhou, Jiangsu 215345 (CN); DAI, Chunxu, Suzhou, Jiangsu 215345 (CN)
(74) Representative: MERH-IP Matias Erny Reichl Hoffmann Patentanwälte PartG mbB
(86) International application number: PCT/CN2023/119321
(87) International publication number: WO 2024/061147

(57) **Abstract**

This invention relates to the field of unmanned aerial vehicles, particularly to a cargo hold and an unmanned aerial vehicle comprising the same. The cargo hold is to be applied to an unmanned aerial vehicle and comprises a cabin door connected to the cargo hold for the unmanned aerial vehicle. The cargo hold further includes a delivery and collecting mechanism, which is located inside the cargo hold.

## Description

### Technical Field

This invention relates to the field of unmanned aerial vehicles, particularly to a cargo hold and an unmanned aerial vehicle comprising the same.

### Background

During the process of unmanned aerial vehicle cargo delivery, the weight of the cargo is usually heavy. Due to excessive instantaneous force, the delivery mechanism may be damaged. Therefore, it is necessary to protect the delivery mechanism. Therefore, it is necessary to design a cargo hold that can protect the delivery mechanism during unloading.

### Specification

The purpose of this invention is to provide a cargo hold and an UAV comprising the same, which has good safety, high integration, and can protect the delivery mechanism during use.

To achieve this goal, the present invention adopts the following technical solution.

The present invention provides a cargo hold, to be applied to an unmanned aerial vehicle, comprising:
a cabin door, which is connected to the cargo hold for the unmanned aerial vehicle;
a delivery and collecting mechanism, which is located inside the cargo hold.

As a preferred option, the delivery and collecting mechanism specifically comprises:
a power transmission unit, which is connected to a winch;
a friction wheel, which is configured to be able to come into contact with or detach from the winch.

As a preferred option, the power transmission unit comprises:
a servo motor, which is connected to a servo motor connecting rod and is used to drive the servo motor connecting rod;
a sliding rod, one end of which is connected to the servo motor connecting rod, and another end of which that is far away from the servo motor connecting rod is connected to the winch.

As a preferred option, the delivery and collecting mechanism further comprises:
a motor, which is used to drive the friction wheel to rotate.

As a preferred option, the power transmission unit further comprises a spring, which is sleeved on the sliding rod to provide a restoring force for the winch.

As a preferred option, the delivery and collecting mechanism further comprises a wheel frame for supporting the winch.

As a preferred option, the cabin door further comprises a hinge that can be maintained in any position, which is installed on the cabin door to maintain the position of the cabin door after the cabin door is opened.

As a preferred option, the cabin door further comprises a rebound hinge connected to the cabin door in order to close the cabin door.

As a preferred option, the cargo hold further comprises a normally closed electromagnetic lock, and when the electromagnetic lock is powered on, the electromagnetic lock will demagnetize, and the cargo will slide out of the cabin door by gravity.

The present invention further provides a drone, comprising a cargo hold as described above, the cargo hold further comprises a plurality of connection points for connecting it with the drone's fuselage.

The beneficial effects of this invention are:
The cargo hold provided by this invention is equipped with a delivery and collecting mechanism. During use, the driving devices for delivery and collecting mechanism will be separated from each other, and avoid damage to the driving devices caused by excessive instantaneous force of the weight of the cargo during unloading.

### BRIEF DESCRIPTION OF THE DRAWINGS

Figure 1 is a schematic diagram of the structure of the cargo hold;
Figure 2 is a schematic diagram of the structure of the cargo hold;
Figure 3 is a schematic diagram of the delivery and collecting mechanism;
Figure 4 is an enlarged partial view of the delivery and collecting mechanism;
Figure 5 is a top view of the contact of the winch and the friction wheel;
Figure 6 is a top view of the separation of the winch and the friction wheel.

### Specific implementation method

The technical solution of the present invention will be further explained in conjunction with the accompanying drawings and implementation methods. It can be understood that the specific embodiments described here are only used to explain the present invention, and not to limit the present invention. Additionally, it should be noted that for ease of description, only the parts related to the present invention are shown in the accompanying drawings, not all of them.

In the description of this invention, it should be noted that unless otherwise specified and limited, the terms "installation", "connection", and "connection" should be broadly understood, for example, they can be fixed connections or detachable connections. It can be a mechanical connection or an electrical connection. It can be directly connected, indirectly connected through an intermediate medium, or connected internally between two components. For ordinary technical personnel in this field, the specific meanings of the above terms in this invention can be understood in specific situations.

In this invention, unless otherwise specified and limited, the first feature above or below the second feature may include direct contact between the first and second features, or may include contact between the first and second features through another feature between them instead of direct contact. Moreover, the first feature being 'above', 'above', and 'above' the second feature includes the first feature being directly above and diagonally above the second feature, or simply indicating that the first feature is horizontally higher than the second feature. The first feature being "below", "below", and "below" include the first feature being directly below and diagonally below the second feature, or simply indicating that the first feature has a lower horizontal height than the second feature.

In the description of this embodiment, the terms "up", "down", "right", etc. are based on the orientation or position relationship shown in the accompanying drawings, only for the convenience of description and simplification of operation, and do not indicate or imply that the device or component referred to must have a specific orientation, be constructed and operated in a specific orientation, and therefore cannot be understood as a limitation of the present invention. In addition, the terms "first" and "second" are only used to distinguish in description and do not have any special meaning.

### Example 1:

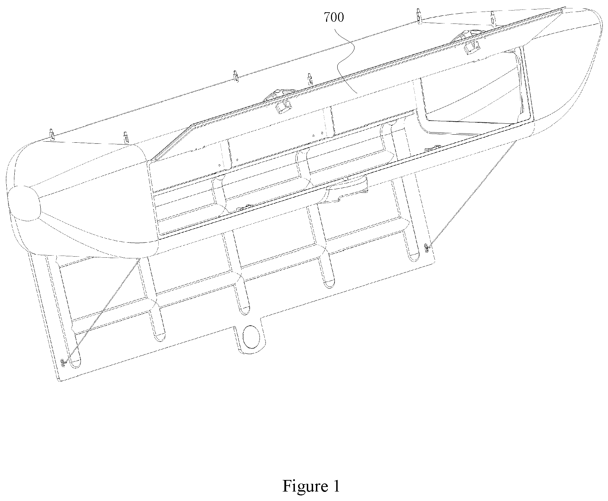

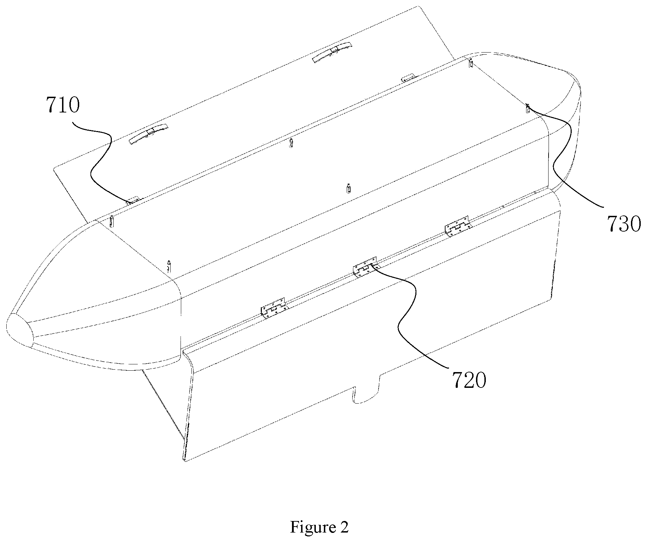

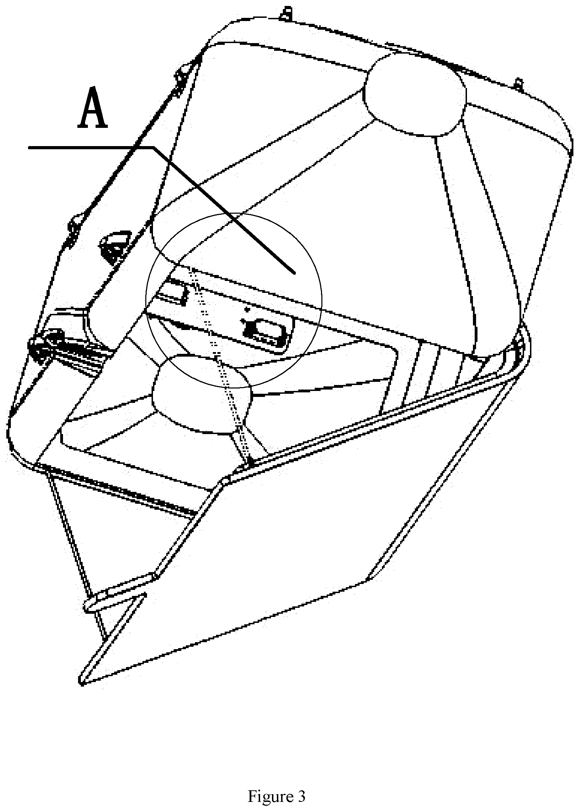

As shown in Figures 1-3, the present invention provides a cargo hold, which is to be specifically applied to an unmanned aerial vehicle. The cargo hold comprises a cabin door 700, which is connected to the cargo hold for the unmanned aerial vehicle.

Furthermore, the cargo hold also includes a delivery and collecting mechanism 600, which is located inside the cargo hold for the unmanned aerial vehicle.

Specifically, the delivery and collecting mechanism 600 includes a power transmission unit 200 connected to a winch 300, and a friction wheel 400. Specifically, the friction wheel 400 is configured to be able to contact or detach from the winch 300, for protecting the motor and other wire receiving driving devices. The delivery and collecting mechanism 600 is also equipped with a wheel frame 301 to support the winch 300.

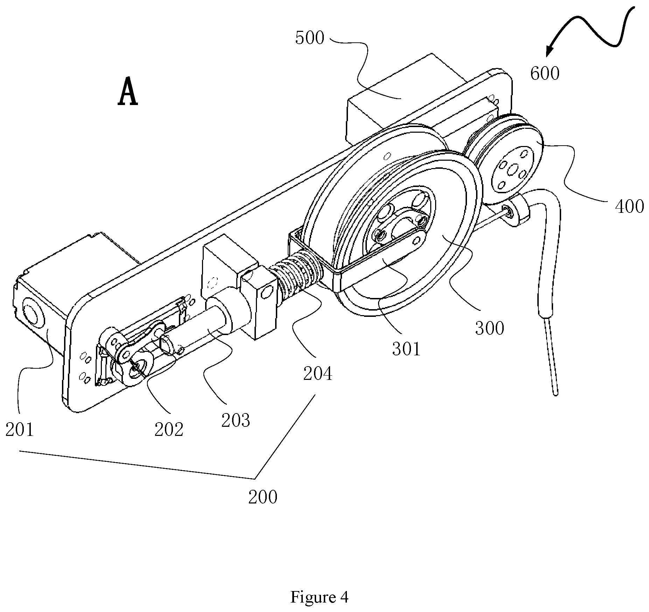

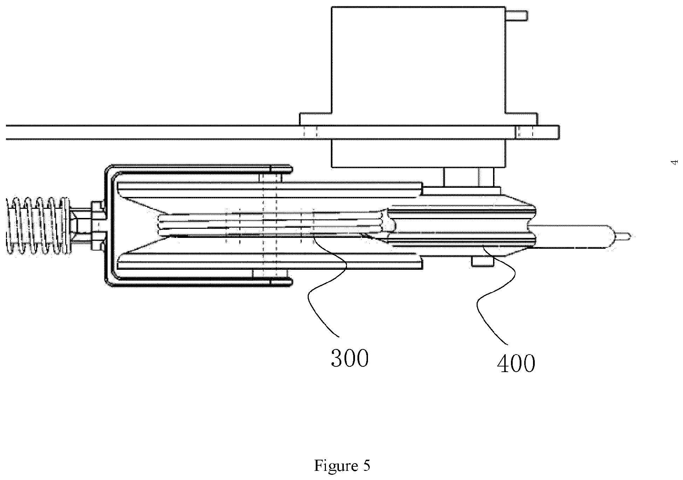

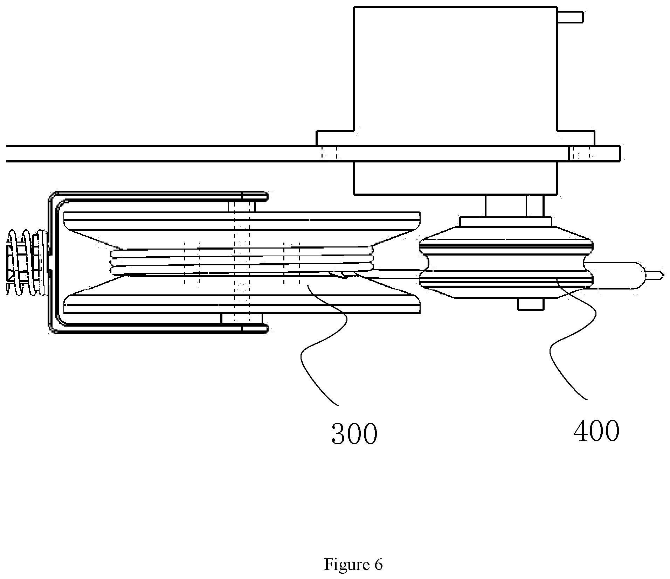

Referring to Figures 4-6, the delivery and collecting mechanism 600 includes a power transmission unit 200 that also includes a servo motor 201 connected to the servo motor connecting rod 202. The servo motor 201 is used to drive the servo motor connecting rod 202. In addition, the power transmission unit 200 also includes a sliding rod 203, one end of which is connected to the servo motor connecting rod 202, another end of which that is far away from the servo motor connecting rod 202 is connected to the winch 300.

It is worth noting that the power transmission unit 200 also includes a spring 204, which is sleeved on the sliding rod 203 to provide a restoring force for the winch 300.

Furthermore, the delivery and collecting mechanism 600 provided in this invention, specifically includes a motor 500 for driving the rotation of the friction wheel 400.

The winch 300 in this invention can be made of various materials. In this invention, the winch 300 made of polyurethane material is preferred, which has good properties such as wear resistance, chemical corrosion resistance, high strength, high elasticity, low pressure resistance, strong shock absorption, tear resistance, radiation resistance, high load-bearing capacity, and shock absorption and buffering. Polyurethane wheels have excellent sound absorption properties, and do not produce noise during movement, achieving a silent result. Similarly, the friction wheel 400 in this invention is also made of polyurethane material, and the reason will not be repeated here.

When in use, the servo motor 201 controls the servo motor connecting rod 202 to rotate, which drives the sliding rod 203 to translate and overcome the thrust of the spring 204, thereby driving the winch 300 to detach from the friction wheel 400. When the winch 300 and the friction wheel 400 detach, the winch 300 will become a free rotating state. At this time, the delivery and collecting mechanism 600 is in a free state. During the free state, due to the excessive load mass, there may be a large instantaneous impact force. As the winch 300 and the friction wheel 400 are separated from each other, there will be no impact on the friction wheel 400, thus protecting the motor connected to the friction wheel 400. After the load is completely released, the servo motor 201 starts again, and the sliding rod 203 is pushed by the rotation of the servo motor connecting rod 202. The winch 300 recovers under the action of the spring 204 and comes into contact with the friction wheel 400 again. Then, the motor connected to the friction wheel 400 is driven to rotate, driving the winch 300 to rotate. Specifically, the ropes installed on the winch 300 are preferably made of Kevlar ropes, which have good tensile properties and can carry large loads.

Continuing to refer to Figures 1-3, it can be seen that the cabin door 700 also includes a hinge 710 that can be maintained in any position, which is installed on the cabin door 700 to keep it in any position after opening of the cabin door 700.

Furthermore, the cabin door 700 also includes a rebound hinge 720, which is connected to the cabin door 700 and is used for closing the cabin door 700. The rebound hinge 720 can provide a certain torque to the cabin door 700 to complete the return of the cabin door 700 after the cargo is placed.

It is worth noting that the cargo hold also includes a normally closed electromagnetic lock. When the drone needs to unload cargo, the flight control system sends an operation signal to the servo motor 201, which controls the servo motor connecting rod 202 to rotate. At this time, it drives the sliding rod 203 to translate and overcomes the thrust of the spring 204, thereby driving the winch 300 to detach from the friction wheel 400. When the winch 300 and the friction wheel 400 detach, the winch 300 will become a free rotating state. At this time, the delivery and collecting mechanism 600 is in a free unwinding state, and the electromagnetic lock is powered on. Because it is a normally closed electromagnetic lock, the electromagnetic lock will demagnetize, and the cargo will slide out of the cabin door 700 using the delivery and collecting mechanism 600 under gravity. The winch 300 and the friction wheel 400 are separated from each other, and there is no impact on the friction wheel 400 at this time, thus protecting the motor connected to the friction wheel 400. After the goods are completely slid out, the flight control system sends a signal to the servo motor 201 again, and the servo motor 201 starts again. At this time, the sliding rod 203 is pushed by the rotation of the servo motor connecting rod 202, and the winch 300 recovers under the action of the spring 204 and comes into contact with the friction wheel 400 again. Then, the motor connected to the friction wheel 400 is driven to rotate, driving the winch 300 to rotate. The delivery and collecting mechanism 600 will retrieve the rope and complete the aerial deployment task.

### Example 2:

This embodiment provides a drone comprising a cargo hold as described above, which further includes a plurality of fuselage connection points 730 for connecting it with the drone's fuselage.

Obviously, the above embodiments of the present invention are only for the purpose of clearly illustrating the examples provided by the present invention, and are not intended to limit the embodiments of the present invention. For ordinary technical personnel in the relevant field, other forms of changes or modifications can be made based on the above explanation. It is not necessary and impossible to exhaustively list all implementation methods here. Any modifications, equivalent substitutions, and improvements made within the spirit and principles of this invention shall be included in the scope of protection of the claims of this invention.

## Claims

1. A cargo hold, to be applied to an unmanned aerial vehicle, comprising:
a cabin door, which is connected to the cargo hold for the unmanned aerial vehicle;
a delivery and collecting mechanism, which is located inside the cargo hold.

2. The cargo hold according to claim 1, **characterized in that** the delivery and collecting mechanism specifically comprises:
a power transmission unit, which is connected to a winch;
a friction wheel, which is configured to be able to come into contact with or detach from the winch.

3. The cargo hold according to claim 2, **characterized in that** the power transmission unit comprises:
a servo motor, which is connected to a servo motor connecting rod and is used to drive the servo motor connecting rod;
a sliding rod, one end of which is connected to the servo motor connecting rod, and another end of which that is far away from the servo motor connecting rod is connected to the winch.

4. The cargo hold according to claim 3, **characterized in that** the delivery and collecting mechanism further comprises:
a motor, which is used to drive the friction wheel to rotate.

5. The cargo hold according to claim 4, **characterized in that** the power transmission unit further comprises a spring, which is sleeved on the sliding rod to provide a restoring force for the winch.

6. The cargo hold according to claim 4, **characterized in that** the delivery and collecting mechanism further comprises a wheel frame for supporting the winch.

7. The cargo hold according to claim 1, **characterized in that** the cabin door further comprises a hinge that can be maintained in any position, which is installed on the cabin door to maintain the position of the cabin door after the cabin door is opened.

8. The cargo hold according to claim 1, **characterized in that** the cabin door further comprises a rebound hinge connected to the cabin door in order to close the cabin door.

9. The cargo hold according to claim 1, **characterized in that** the cargo hold further comprises a normally closed electromagnetic lock, and when the electromagnetic lock is powered on, the electromagnetic lock will demagnetize, and the cargo will slide out of the cabin door by gravity.

10. A drone, comprising the cargo hold as claimed in any one of claims 1-9, **characterized in that** the cargo hold further comprises a plurality of connection points for connecting it with the drone's fuselage.
